Europäisches Patentamt

European Patent Office

Office européen des brevets

(19)

(11) Veröffentlichungsnummer: **0 224 062**
**A1**

## (12) EUROPÄISCHE PATENTANMELDUNG

(21) Anmeldenummer: 86114992.0

(22) Anmeldetag: 28.10.86

(51) Int. Cl.⁴: **G01K 17/10** , G01K 17/16

(30) Priorität: 11.11.85 DE 3539940

(43) Veröffentlichungstag der Anmeldung:
03.06.87 Patentblatt 87/23

(84) Benannte Vertragsstaaten:
CH DE FR LI NL SE

(71) Anmelder: **Siemens Aktiengesellschaft Berlin
und München**
**Wittelsbacherplatz 2**
**D-8000 München 2(DE)**

(72) Erfinder: **Stark, Reinhard, Dipl.-Ing.**
**Wodanstrasse 20**
**D-8500 Nürnberg(DE)**

(54) **Betriebsverfahren für einen Wärmemengenzähler.**

(57) Bei dem erfindungsgemäßen Betriebsverfahren zur Messung der an einem Wärmeverbraucher abgegebenen Wärmemenge wird die Temperaturdifferenz zwischen Vor-und Rücklauf des Wärmeverbrauchers in festen Zeitabständen gemessen und abgespeichert. Nach einem konstanten Volumendurchsatz wird der abgespeicherte Temperaturmeßwert aufsummiert. Durch die Temperaturmessung in festen zeitlichen Abständen kann die Batterielebensdauer, die in erster Linie von der Anzahl der Temperaturmessungen abhängt, relativ exakt vorherbestimmt werden. Die Größ des konstanten Volumendurchsatzes, bei dem der abgespeicherte Temperaturdifferenz-Meßwert weiter verarbeitet wird, kann relativ klein gewählt werden, da sie nicht die Batterielebensdauer beeinflußt.

FIG 1

EP 0 224 062 A1

## Betriebsverfahren für einen Wärmemengenzähler

Die Erfindung betrifft ein Betriebsverfahren für einen Wärmemengenzähler zur Messung der an einen Wärmeverbraucher abgegebenen Wärmemenge, wobei die Temperaturdifferenz zwischen Vor-und Rücklauf des Wärmeverbrauchers in Abständen gemessen wird und jeweils nach einem konstanten Volumendurchsatz eine Aufsummierung der Temperaturdifferenzmeßwerte erfolgt.

Ein derartiges Betriebsverfahren ist bei im Handel erhältlichen Geräten realisiert. Dabei wird immer nach einem konstanten Volumendurchsatz, z.B. .einer Umdrehung eines Flügelrad-Volumenmessers, eine Messung der Temperaturdifferenz in Vor-und Rücklauf durchgeführt. Die erhaltenen Temperaturdifferenz-Meßwerte werden aufsummiert. Die Summe ist dann nicht nur der Temperaturdifferenz, sondern auch dem Volumendurchsatz proportional und stellt somit ein Maß für die Wärmemenge dar.

Diese Methode besitzt jedoch zwei Nachteile:

1. Bei batteriebetriebenen Wärmemengenzählern wird die Batterie in erster Linie durch die Temperaturmessungen beansprucht. Die Anzahl der Temperaturmessungen und somit auch die Batterielebensdauer hängt jedoch bei dem bekannten Verfahren vom Durchfluß ab und kann deshalb nicht exakt vorbestimmt werden.

2. Vielfach sind Wärmemengenzähler auch mit einer Temperaturanzeige ausgestattet. Beim bekannten Verfahren wird jedoch bei stehendem Medium keine Temperaturmes sung durchgeführt und somit die Temperaturanzeige nicht aktualisiert.

Aufgabe der Erfindung ist es daher, ein Betriebsverfahren der eingangs genannten Art so auszugestalten, daß die genannten Nachteile vermieden werden.

Diese Aufgabe wird erfindungsgemäß dadurch gelöst, daß die Temperaturdifferenz in festen Zeitabständen gemessen und abgespeichert wird und daß jeweils nach einem konstanten Volumendurchsatz der abgespeicherte Temperaturmeßwert aufsummiert wird.

Der Zeitabstand zwischen zwei Temperaturmessungen kann somit einerseits in Hinblick auf die ausreichende Erfassung von Temperaturänderungen, andererseits in Hinblick auf niedrigen, mittleren Stromverbrauch optimiert werden. Dabei ist im allgemeinen auch eine, die Temperaturänderungen ausreichend berücksichtigende Temperaturanzeige möglich.

Da die Größe des konstanten Volumendurchsatzes, nach dem die Temperaturdifferenz weiter verarbeitet wird, nicht mehr die Batterielebensdauer beeinflußt, kann dieser Volumendurchsatz relativ klein gewählt werden. Dies spielt zwar im Dauerbetrieb keine wesentliche Rolle, führt jedoch bei der Überprüfung des Wärmemengenzählers zu kürzerer Meßzeit.

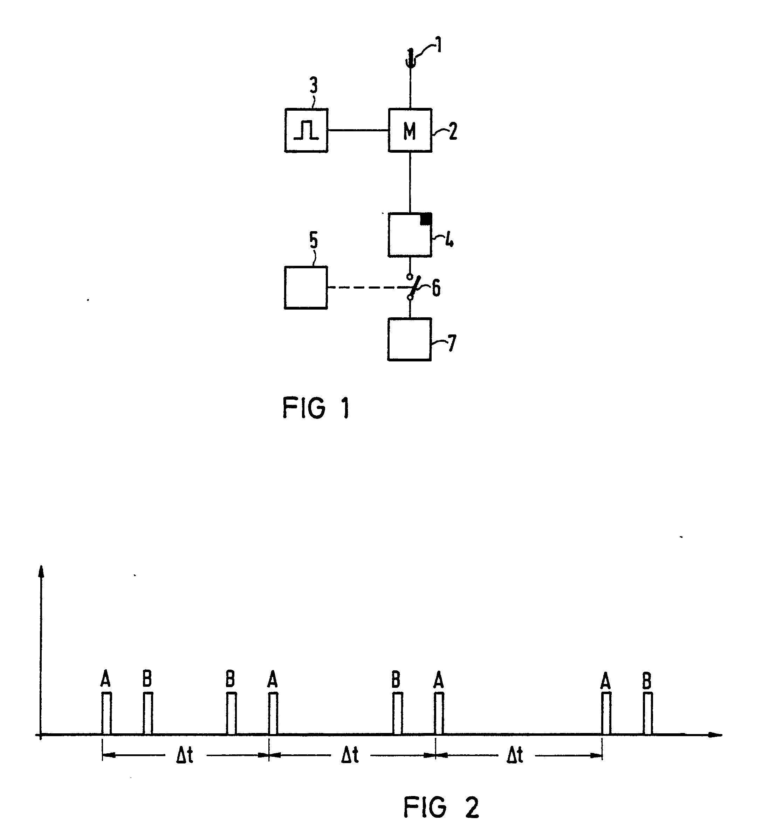

Ein Beispiel des erfindungsgemäßen Betriebsverfahrens wird nachfolgend anhand der Figuren 1 und 2 näher erläutert.

Fig. 1 zeigt schematisch den Aufbau eines Wärmemengenzählers. Ein Temperaturfühler 1 ist an eine Auswerte schaltung 2 angeschlossen. Die Auswerteschaltung 2 wird von einem Impulsgeber 3 in festen Zeitabständen angesteuert und wertet dann die Temperatur aus. Der so ermittelte Temperaturwert wird in einer Speicherschaltung 4 abgespeichert. Ein Volumenmeßgerät 5 gibt immer nach einem festen Volumendurchsatz einen Impuls ab, der einen Schalter 6 schließt. Der im Speicher 4 abgespeicherte Temperaturmeßwert wird über den geschlossenen Schalter 6 in einer Auswerteeinrichtung 7 aufsummiert. Der aufsummierte Wert ist der Temperaturdifferenz und dem Volumendurchsatz proportional und stellt somit ein Maß für die Wärmemenge dar.

Der zeitliche Funktionsablauf des dargestellten Wärmengenzählers ist in Fig. 2 dargestellt. Die vom Impulsgeber 3 in festen zeitlichen Abständen t abgegebenen Impulse sind mit A bezeichnet. Mit diesen Impulsen wird der jeweils vorliegende aktuelle Temperaturmeßwert im Speicher 4 abgespeichert. Die von der Volumenmeßeinrichtung 5 abgegebenen Impulse sind mit B bezeichnet. Die Impulse B liegen in keinem festen zeitlichen Raster, sondern hängen vom jeweiligen Volumendurchsatz ab. Mit den Impulsen B wird der beim jeweils vorhergehenden Impuls A ermittelte Temperaturmeßwert weiter verarbeitet.

**Ansprüche**

1. Betriebsverfahren für einen Wärmemengenzähler zur Messung der an einen Wärmeverbraucher abgegebenen Wärmemenge, wobei die Temperaturdifferenz zwischen Vor-und Rücklauf des Wärmeverbrauchers in Abständen gemessen wird und jeweils nach einem konstanten Volumendurchsatz eine Aufsummierung der Temperaturdifferenzmeßwerte erfolgt, **dadurch gekennzeichnet,** daß die Temperaturdifferenz in festen Zeitabständen gemessen und abgespeichert wird und daß jeweils nach einem konstanten Volumendurchsatz der abgespeicherte Temperaturdifferenzwert aufsummiert werden.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 553 860 (R. FRIEDL et al.)<br>* Figuren 1,2; Einführung; Seite 4, Abschnitt 3 - Seite 7, Abschnitt 3 * | 1 | G 01 K 17/10<br>G 01 K 17/16 |
| | --- | | |
| X | FR-A-2 305 807 (R. FISCH et al.)<br>* Einführung; Seite 1, Abschnitt 5 - Seite 2, Abschnitt 2 * | 1 | |
| | --- | | |
| X | DE-A-2 316 718 (H. MENSE)<br>* Figuren; Einführung; Seite 1, Abschnitt 5 - Seite 2, Abschnitt 2 * | 1 | |
| | --- | | |
| X | DE-A-3 122 599 (H. SCHMITZ)<br>* Figuren; insgesamt * | 1 | RECHERCHIERTE SACHGEBIETE (Int. Cl.4) |
| | ----- | | G 01 K |

Der vorliegende Recherchenbericht wurde für alle Patentansprüche erstellt.

| Recherchenort | Abschlußdatum der Recherche | Prüfer |
|---|---|---|
| DEN HAAG | 16-02-1987 | VISSER F.P.C. |